# EUROPÄISCHE PATENTSCHRIFT

(11) **EP 1 251 042 B1**
(45) Veröffentlichungstag und Bekanntmachung des Hinweises auf die Patenterteilung: **11.08.2004**
(21) Anmeldenummer: 02007286.4
(22) Anmeldetag: 02.04.2002
(51) Int. Cl.: B60R 21/20

(54) **Gassack-Modul**
Airbag module
Module de coussin gonflable

(30) Priorität: 18.04.2001 DE 20106695 U
(43) Veröffentlichungstag der Anmeldung: 23.10.2002
(73) Patentinhaber: TRW Automotive Safety Systems GmbH, 63743 Aschaffenburg (DE)
(72) Erfinder: Bieber, Udo, 63843 Niedernberg (DE); Neupert, Ralph, 63839 Kleinwallstadt (DE); Helmstetter, Matthias, 63743 Aschaffenburg (DE)
(74) Vertreter: Degwert, Hartmut, Dipl.-Phys.

(56) Entgegenhaltungen:
- EP-A- 0 999 100
- GB-A- 2 323 572
- US-B1- 6 173 987

## Beschreibung

Die Erfindung betrifft ein Gassack-Modul für Rückhaltesysteme in Fahrzeugen mit einem topfartigen Gehäuseteil aus einem Metallblech, an dessen Boden ein Gasgenerator befestigt ist und an dessen vom Boden aufragender Umfangswand ein Gassack und eine Abdeckkappe aus Kunststoff befestigt sind. Die Erfindung betrifft ferner ein Gassack-Modul für Rückhaltesysteme in Fahrzeugen mit einem topfartigen Gehäuseteil aus Kunststoff.

An die Befestigung einer Abdeckkappe an dem Gehäuseteil eines Gassack-Moduls wird die Anforderung gestellt, daß die Abdeckkappe trotz einer möglichst einfachen Montage unter Einwirkung der bei Aktivierung des Gassacks auftretenden extremen Kräfte sicher mit dem Gehäuseteil verbunden bleibt. Überwiegend erfolgt daher die Befestigung mittels Verschrauben oder Vernieten.

US-B1-6,173,987 beschreibt ein Gassack-Modul, bei dem auf einer Grundplatte ein Gasgenerator sowie mittels einer Halterung der Gassack befestigt sind. Die Grundplatte ist so ausgeformt, daß die Abdeckung hineingreift und somit fest mit der Grundplatte verbunden ist.

EP-A2-0 999 100 offenbart ein Luftsackmodul, bei dem die Befestigung des Luftsacks an der Gehäusewand mittels eines einrastenden Halteelements erfolgt.

Die Erfindung stellt ein Gassack-Modul für Rückhaltesysteme in Fahrzeugen bereit, dessen Abdeckkappe auf einfache Weise montierbar ist und bei dem ein unbeabsichtigtes Lösen der Abdeckkappe von dem Gehäuseteil ausgeschlossen ist.

Dies wird gemäß eines ersten Erfindungsgedankens dadurch erreicht, daß bei einem Gassack-Modul mit einem topfartigen Gehäuseteil aus einem Metallblech die Abdeckkappe eine an der Außenseite der Umfangswand des Gehäuseteils anliegende Stützwand aufweist, die mit Durchtrittsfenstern versehen ist. An dem vom Boden abgewandten freien Rand der Umfangswand des Gehäuseteils sind hakenförmige Blechlaschen angeordnet, welche durch die Durchtrittsfenster der Stützwand der Abdeckkappe greifen und an ihrer Außenseite in Richtung zum Boden des Gehäuseteils umgebogen sind. Der dem Boden des Gehäuseteils zugewandte freie Rand der Stützwand der Abdeckkappe ist durch aus dem Gehäuseteil freigestanzte und gegen die Außenseite der Stützwand gebogene Biegelaschen in Anlage an der Umfangswand des Gehäuseteils gehalten. Durch die zusätzlichen Biegelaschen am Gehäuseteil wird auch verhindert, daß sich die Abdeckkappe durch eine Bewegung relativ zum Gehäuseteil in Richtung des Gehäusebodens von dem Gehäuseteil lösen kann.

Eine Bewegung der Abdeckkappe relativ zum Gehäuseteil in Richtung des Gehäusebodens wird bei einer bevorzugten Ausführungsform zusätzlich zu den eben dargestellten Biegelaschen noch dadurch erschwert, daß wenigstens mehrere Durchtrittsfenster der Stützwand der Abdeckkappe durch jeweils einen U-förmigen ausgesparten Schlitz gebildet sind, der eine auslenkbare Arretierfahne begrenzt, welche die Abdeckkappe an der das Durchtrittsfenster durchgreifenden hakenförmigen Blechlasche sichert.

Gemäß eines zweiten Erfindungsgedankens ist ein Gassack-Modul mit einem topfartigen Gehäuseteil aus Kunststoff vorgesehen, an dessen Boden ein Gasgenerator befestigt ist und über dessen vom Boden aufragende Umfangswand der Befestigungsbund eines Gassacks gestülpt ist. Eine Abdeckkappe des Gassack-Moduls weist eine den Befestigungsbund des Gassacks umgebende, mit Durchtrittsfenstern versehene Stützwand auf, wobei außenseitig an der Umfangswand des Gehäuseteils Rastnasen angeformt sind, die entsprechende Einhängöffnungen des Befestigungsbundes durchgreifen. Die Rastnasen weisen eine dem Boden zugewandte Rastkante auf, hinter der eine entsprechende Rastfläche eines Durchtrittsfensters verrastet. Die angeformten Rastnasen dienen so sowohl zur Befestigung der Abdeckkappe als auch zur Befestigung des Gassacks an dem topfartigen Gehäuseteil.

Bei einer bevorzugten Ausführungsform ist die Stützwand der Abdeckkappe von einem Sicherungsgürtel umgeben. Der Sicherungsgürtel gewährleistet analog zu den Biegelaschen des Gassack-Moduls gemäß des ersten Erfindungsgedankens, daß die Abdeckkappe in Anlage an dem topfartigen Gehäuseteil gehalten wird.

Weitere vorteilhafte Ausgestaltungen der Erfindung ergeben sich aus den Unteransprüchen.

Die Erfindung wird nachfolgend unter Bezugnahme auf zwei Ausführungsformen gezeigt, die in den beigefügten Zeichnungen dargestellt sind. In diesen zeigen:
- Figur 1 einen Ausschnitt eines Gassack-Moduls gemäß des ersten Erfindungsgedankens in einer Seitenansicht;
- Figur 2 einen Ausschnitt der Abdeckkappe und des Gehäuseteils des Gassack-Moduls von Figur 1 in einer schematischen Vorderansicht;
- Figur 3 einen Ausschnitt eines Gassack-Moduls gemäß des zweiten Erfindungsgedankens in einer Seitenansicht.

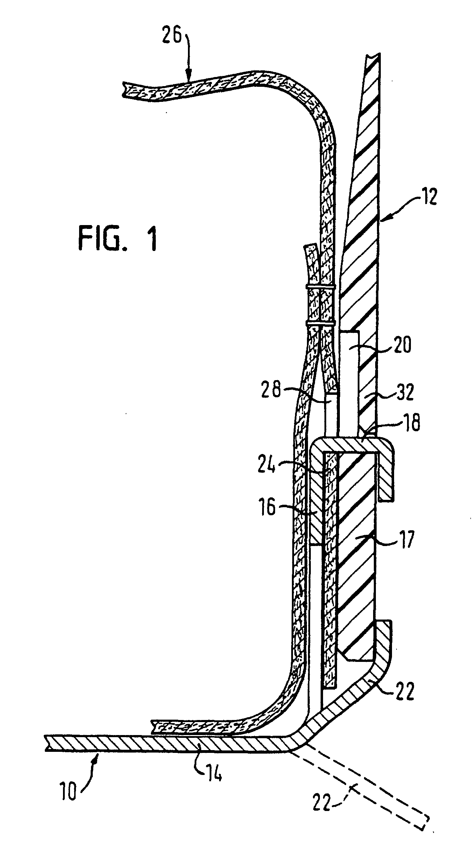

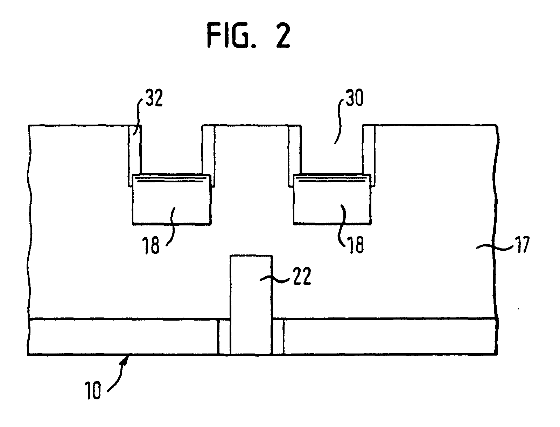

Das in Figur 1 auschnittsweise dargestellte Gassack-Modul weist ein topfartiges Gehäuseteil 10 aus einem Metallblech und eine Abdeckkappe 12 aus Kunststoff auf. Das topfartige Gehäuseteil 10 besteht aus einem Boden 14, an dem ein Gasgenerator befestigt werden kann, und einer vom Boden aufragenden Umfangswand 16, an deren Außenseite eine Stützwand 17 der Abdeckkappe 12 anliegt. An der Umfangswand 16 sind stellenweise an ihrem bezüglich Figur 1 oberen Ende hakenförmige Blechlaschen 18 angeordnet, die jeweils in ein Durchtrittsfenster 20 der Stützwand 17 der Abdeckkappe 12 greifen und an ihrer Außenseite in Richtung zum Boden 14 des topfartigen Gehäuseteils 10 umgebogen sind. Die Abdeckkappe 12 wird an ihrem bezüglich Figur 1 unteren Ende durch freigestanzte und gegen die Außenwand der Stützwand 17 gebogene Biegelaschen 22 in Anlage an der Umfangswand 16 des Gehäuseteils gehalten. Zwischen der Außenfläche der Umfangswand 16 des Gehäuseteils und der Innenfläche der Stützwand 17 der Abdeckkappe ist ein Befestigungsbund 24 eines Gassacks 26 eingeklemmt. Der Gassack 26 ist an seinem Befestigungsbund 24 so über die Umfangswand 16 des Gehäuseteils 10 gestülpt, daß die hakenförmig gebogenen Blechlaschen 18 durch Einhängöffnungen 28 an dem Befestigungsbund 24 des Gassacks 26 ragen. Um die Abdeckkappe 12 an den die Durchtrittsfenster 20 durchgreifenden hakenförmigen Blechlaschen 18 zu sichern, sind mehrere Durchtrittsfenster 20 der Stützwand 17 (siehe auch Figur 2) durch jeweils einen U-förmig ausgesparten Schlitz 30 gebildet, der eine auslenkbare Arretierfahne 32 begrenzt.

Bei der Montage eines erfindungsgemäßen Gassack-Moduls nach Figur 1 wird die Abdeckkappe 12 über das topfartige Gehäuseteil 10 geschoben, so daß die hakenförmigen Blechlaschen 18 in den Durchtrittsfenstern 20 verrasten. Anschließend werden die freigestanzten Biegelaschen 22 von der in Figur 1 gestrichelt gezeigten Position in die in durchgezogenen Linien gezeigte Position gegen die Außenseite der Stützwand 17 gebogen, so daß die Stützwand 17 in Anlage an der Umfangswand 16 gehalten ist.

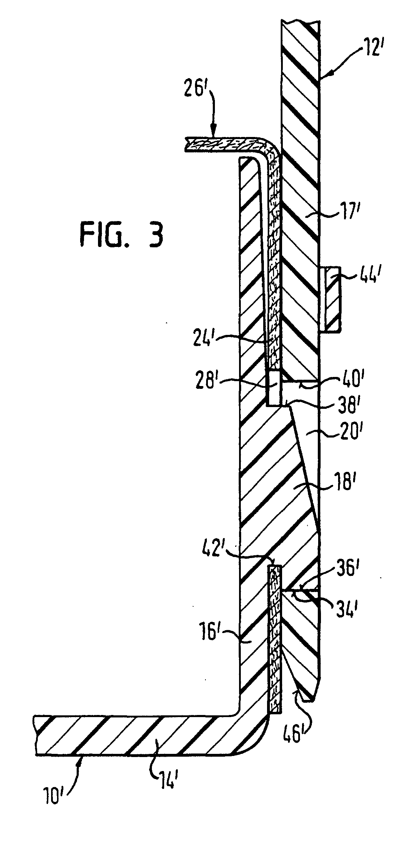

Das in Figur 3 ausschnittsweise abgebildete Gassack-Modul weist ein topfartiges Gehäuseteil 10' aus Kunststoff und eine Abdeckkappe 12' mit Stützwand 17' auf. Das topfartige Gehäuseteil 10' besteht ebenfalls aus einem Boden 14', an dem ein Gasgenerator befestigt werden kann, und einer vom Boden aufragenden Umfangswand 16'. An der Außenseite der Umfangswand 16' sind Rastnasen 18' angeformt, die durch Durchtrittsfenster 20' der Stützwand 17' ragen. Jeweils eine Rastnase 18' und ein Durchtrittsfenster 20' wirken so zusammen, daß eine bezüglich Figur 3 nach oben weisende Rastfläche 34' der Abdeckkappe 12' an einer bezüglich Figur 3 nach unten weisenden Rastkante 36' der Rastnasen 18' anliegt. Damit wird ein Verschieben der Abdeckkappe relativ zum Gehäuseteil bezüglich Figur 3 nach unten verhindert. Um ein Entrasten durch eine Bewegung in entgegengesetzter Richtung, nämlich bezüglich Figur 3 nach oben, zu verhindern, ist jeweils an dem der Rastkante 36' entgegengesetzten Ende einer Rastnase 18' eine Anschlagfläche 38' ausgebildet, die mit jeweils einer benachbarten Begrenzungskante 40' eines Durchtrittsfensters 20' zusammenwirken kann. Über die Umfangswand 16' ist ein Befestigungsbund 24' eines Gassacks 26' gestülpt, der in Einhängöffnungen 28' an den Rastnasen 18' des Gehäuseteils 10' befestigt ist. Dazu ist jeweils in der Rastkante 36' einer Rastnase 18' eine Nut 42' ausgespart, in die die Berandung einer Einhängöffnung 28' des Gassacks 26' eingreift. Der Befestigungsbund 24' des Gassacks 26' ist so zwischen Umfangswand 16' und Stützwand 17' eingeklemmt. Die Umfangswand 16' des Gehäuseteils 10' ragt in der vom Boden 14' abgewandten Richtung über die Rastnase 18' hinaus, so daß der Innenraum des Gassacks 26' durch die Umfangswand 16' gegenüber dem Durchtrittsfenster 20' abgegrenzt ist, und so beim Aufblasen und Entfalten des Gassacks ein Durchblasen durch die Durchtrittsfenster 20' verhindert ist. Um die Stützwand 17' der Abdeckkappe 12' in Anlage an der Umfangswand 16' des Gehäuseteils 10' zu halten, ist die Stützwand bezüglich Figur 3 oberhalb der Rastnase 18' von einem Sicherungsgürtel 44'umgeben. Die Stützwand 17' weist ferner an ihrem bezüglich Figur 3 unteren Ende innenseitig eine Anlaufschräge 46' auf. Durch die Anlaufschräge 46' wird bei der Montage der Abdeckkappe 12' auf dem topfartigen Gehäuseteil 10' das Überfahren der Rastnasen 18' durch die Stützwand 17' der Abdeckkappe erleichtert.

Bei der Montage eines erfindungsgemäßen Gassack-Moduls nach Figur 3 wird die Abdeckkappe 12' über das topfartige Gehäuseteil 10' geschoben, so daß die Rastnasen 18' in den Durchtrittsfenstern 20' verrasten. Anschließend wird die Stützwand 17' mit dem Sicherungsgürtel 44' umgeben, so daß die Stützwand 17' in Anlage an der Umfangswand 16' gehalten ist.

## Patentansprüche

1. Gassack-Modul für Rückhaltesysteme in Fahrzeugen, mit einem topfartigen Gehäuseteil (10) aus einem Metallblech, an dessen Boden (14) ein Gasgenerator befestigt ist und an dessen vom Boden (14) aufragender Umfangswand (16) ein Gassack (26) und eine Abdeckkappe (12) aus Kunststoff befestigt sind, **dadurch gekennzeichnet, daß** die Abdeckkappe (12) eine an der Außenseite der Umfangswand (16) des Gehäuseteils (10) anliegende Stützwand (17) aufweist, die mit Durchtrittsfenstern (20) versehen ist, daß an dem vom Boden (14) abgewandten freien Rand der Umfangswand (16) des Gehäuseteils (10) hakenförmige Blechlaschen (18) angeordnet sind, welche durch die Durchtrittsfenster (20) der Stützwand (17) der Abdeckkappe (12) greifen und an ihrer Außenseite in Richtung zum Boden (14) des Gehäuseteils (10) umgebogen sind, und daß der dem Boden (14) des Gehäuseteils (10) zugewandte freie Rand der Stützwand (17) der Abdeckkappe (12) durch aus dem Gehäuseteil (10) freigestanzte und gegen die Außenseite der Stützwand (17) gebogene Biegelaschen (22) in Anlage an der Umfangswand (16) des Gehäuseteils (10) gehalten ist.

2. Gassack-Modul nach Anspruch 1, **dadurch gekennzeichnet, daß** der Gassack (26) einen über die Umfangswand (16) des Gehäuseteils (10) gestülpten Befestigungsbund (24) mit von den hakenförmig gebogenen Blechlachen (18) durchragten Einhängöffnungen (28) aufweist.

3. Gassack-Modul nach Anspruch 2, **dadurch gekennzeichnet, daß** der Befestigungsbund (24) des Gassacks (26) zwischen der Außenfläche der Umfangswand (16) des Gehäuseteils (10) und der Innenfläche der Stützwand (17) der Abdeckkappe (12) eingeklemmt ist.

4. Gassack-Modul nach Anspruch 1, **dadurch gekennzeichnet, daß** wenigstens mehrere Durchtrittsfenster (20) der Stützwand (17) der Abdeckkappe (12) durch jeweils einen U-förmig ausgesparten Schlitz (30) gebildet sind, der eine auslenkbare Arretierfahne (32) begrenzt, welche die Abdeckkappe (12) an der das Durchtrittsfenster (20) durchgreifenden hakenförmigen Blechlasche (18) sichert.

5. Gassack-Modul für Rückhaltesysteme in Fahrzeugen, mit einem topfartigen Gehäuseteil (10') aus Kunststoff, an dessen Boden (14') ein Gasgenerator befestigt ist und über dessen vom Boden (14') aufragende Umfangswand (16') ein Befestigungsbund (24') eines Gassacks (26') gestülpt ist, **dadurch gekennzeichnet, daß** das Gassack-Modul eine Abdeckkappe (12') beinhaltet, die eine den Befestigungsbund (24') des Gassacks (26') umgebende, mit Durchtrittsfenstern (20') versehene Stützwand (17') aufweist, wobei außenseitig an der Umfangswand (16') des Gehäuseteils (10') Rastnasen (18') angeformt sind, die entsprechende Einhängöffnungen (28') des Befestigungsbundes (24') durchgreifen und eine dem Boden (14') zugewandte Rastkante (36') aufweisen, hinter der eine entsprechende Rastfläche (34') eines Durchtrittsfensters (20') verrastet.

6. Gassack-Modul nach Anspruch 5, bei dem die Umfangswand (16') des Gehäuseteils (10') in der vom Boden (14') abgewandten Richtung über die Rastnasen (18') hinausragt.

7. Gassack-Modul nach Anspruch 5 oder 6, bei dem die Stützwand (17') der Abdeckkappe (12') von einem Sicherungsgürtel (44') umgeben ist.

8. Gassack-Modul nach Anspruch 7, bei dem der Sicherungsgürtel (44') auf der vom Boden (14') abgewandten Seite der Rastnasen (18') angeordnet ist.

9. Gassack-Modul nach einem der Ansprüche 5 bis 8, bei dem die Stützwand (17') der Abdeckkappe (12') an ihrem dem Boden (14') des Gehäuseteils (10') zugewandten freien Rand innenseitig eine Anlaufschräge (46') zum Überfahren der Rastnasen (18') aufweist.

10. Gassack-Modul nach einem der Ansprüche 5 bis 9, bei dem in der Rastkante (36') jeder Rastnase (18') eine Nut (42') ausgespart ist und in diese Nut (42') die Berandung einer Einhängöffnung (28') des Gassacks (26') eingreift.

11. Gassack-Modul nach einem der Ansprüche 5 bis 10, bei dem die Rastnasen (18') auf ihrer von der Rastkante (36') abgewandten Seite eine Anschlagfläche (38') für die benachbarte Begrenzungskante (40') des entsprechenden Durchtrittsfensters (20') der Stützwand (17') aufweisen.

## Claims

1. An airbag module for restraint systems in vehicles, comprising a pot-like housing part (10) made of sheet metal, to the base (14) of which a gas generator is attached and to the circumferential wall (16) of which, extending upwards from the base (14), an airbag (26) and a covering cap (12) made of plastic are attached, **characterized in that** the covering cap (12) has a supporting wall (17) that is in contact with the outside of the circumferential wall (16) of the housing part (10), the supporting wall (17) being provided with cutouts (20), **in that** arranged on the free edge of the circumferential wall (16) of the housing part (10) facing away from the base (14) there are hook-shaped metal tabs (18) which pass through the cutouts (20) of the supporting wall (17) of the covering cap (12) and which are bent on their outside towards the base (14) of the housing part (10), and **in that** the free edge of the supporting wall (17) of the covering cap (12) facing the base (14) of the housing part (10) is held in contact with the circumferential wall (16) of the housing part (10) by means of bending tabs (22) that have been punched out of the housing part (10) and bent against the outside of the supporting wall (17).

2. The airbag module according to Claim 1, **characterized in that** the airbag (26) has an attachment collar (24) that is turned over the circumferential wall (16) of the housing part (10) and has suspension openings (28) through which the metal tabs (18) bent to a hook shape project.

3. The airbag module according to Claim 2, **characterized in that** the attachment collar (24) of the airbag (26) is clamped between the outer surface of the circumferential wall (16) of the housing part (10) and the inner surface of the supporting wall (17) of the covering cap (12).

4. The airbag module according to Claim 1, **characterized in that** at least several troughcutouts (20) of the supporting wall (17) of the covering cap (12) are each formed by a U-shaped, cutaway slit (30) that delimits a deflectable arresting tab (32) that secures the covering cap (12) on the hook-shaped metal tab (18) that passes through the cutout (20).

5. An airbag module for restraint systems in vehicles, comprising a pot-like housing part (10') made of plastic, to the base (14') of which a gas generator is attached and over the circumferential wall (16') of which, extending upwards from the base (14'), an attachment collar (24') of an airbag (26') is turned, **characterized in that** the airbag module includes a covering cap (12') having a supporting wall (17') that surrounds the attachment collar (24') of the airbag (26') and is provided with cutouts (20'), latching noses (18') being formed integrally with the outside of the circumferential wall (16') of the housing part (10') that pass through corresponding suspension openings (28') of the attachment collar (24') and have a latching edge (36') facing the base (14'), a corresponding latching surface (34') of a cutout (20') latching behind the latching edge (36').

6. The airbag module according to Claim 5, in which the circumferential wall (16') of the housing part (10') projects beyond the latching noses (18') in the direction facing away from the base (14').

7. The airbag module according to Claim 5 or 6, in which the supporting wall (17') of the covering cap (12') is surrounded by a securing strap (44').

8. The airbag module according to Claim 7, in which the securing strap (44') is arranged on the side of the latching noses (18') facing away from the base (14').

9. The airbag module according to any of Claims 5 to 8, in which the supporting wall (17') of the covering cap (12') has a ramp (46') on the inside of its free edge facing the base (14') of the housing part (10'), the ramp (46') being provided for sliding over the latching noses (18').

10. The airbag module according to any of Claims 5 to 9, in which, in the latching edge (36') of each latching nose (18'), a groove (42') has been worked in and the edge of a suspension opening (28') of the airbag (26') engages into this groove (42').

11. The airbag module according to any of Claims 5 to 10, in which on their side facing away from the latching edge (36'), the latching noses (18') have a stop surface (38') for the adjacent limitation edge (40') of the corresponding cutout (20') of the supporting wall (17').

## Revendications

1. Module de coussin à gaz pour systèmes de retenue dans des véhicules, comportant une partie de boîtier (10) en forme de pot en tôle métallique, sur le fond (14) duquel est fixé un générateur de gaz et sur la paroi périphérique (16) duquel, qui se dresse depuis le fond (14), sont fixés un coussin à gaz (26) et un couvercle (12) en matière plastique, **caractérisé en ce que** le couvercle (12) présente une paroi de soutien en appui sur la face extérieure de la paroi périphérique (16) de la partie de boîtier (10), laquelle paroi de soutien est pourvue de fenêtres de passage (20), **en ce que** sur le bord libre de la paroi de soutien (16) de la partie de boîtier (10), lequel est détourné du fond (14), sont agencées des pattes de tôle (18) en forme de crochets qui s'engagent à travers les fenêtres de passage (20) de la paroi de soutien (17) du couvercle (12) et sont repliées sur leur face extérieure en direction du fond (14) de la partie de boîtier (10), et **en ce que** le bord libre de la paroi de soutien (17) du couvercle (12), lequel est tourné vers le fond (14) de la partie de boîtier (10), est retenu en appui sur la paroi périphérique (16) de la partie de boîtier (10) par des pattes flexibles (22) estampées à partir de la partie de boîtier (10) et recourbées contre la face extérieure de la paroi de soutien (17).

2. Module de coussin à gaz selon la revendication 1, **caractérisé en ce que** le coussin à gaz (26) présente une collerette de fixation (24) retournée sur la paroi périphérique (16) de la partie de boîtier (10), avec des ouvertures de suspension (28) traversées par les pattes (18) repliées en forme de crochets.

3. Module de coussin à gaz selon la revendication 2, **caractérisé en ce que** la collerette de fixation (24) du coussin à gaz (26) est serrée entre la surface extérieure de la paroi périphérique (16) de la partie de boîtier (10) et la surface intérieure de la paroi de soutien (17) du couvercle (12).

4. Module de coussin à gaz selon la revendication 1, **caractérisé en ce qu'**au moins plusieurs découpes de passage (20) de la paroi de soutien (17) du couvercle (12) sont formées chacune par une fente (30) évidée en forme de U qui délimite un talon de blocage (32) susceptible d'être écarté et qui fixe le couvercle sur la patte de tôle (18) en forme de crochet s'engageant à travers la fenêtre de passage (20).

5. Module de coussin à gaz pour systèmes de retenue dans des véhicules, comportant une partie de boîtier (10') en forme de pot en matière plastique, sur le fond duquel est fixé un générateur de gaz et sur la paroi périphérique duquel, qui se dresse depuis le fond (14'), est retournée une collerette de fixation (24') d'un coussin à gaz (26'), **caractérisé en ce que** le module de coussin à gaz comprend un couvercle (12') qui présente une paroi de soutien (17') entourant la collerette de fixation (24') du coussin à gaz (26') et pourvue de fenêtres de passage (20'), des ergots d'enclenchement (18') étant façonnés sur la face extérieure de la paroi périphérique (16') de la partie de boîtier (10'), lesquels s'engagent à travers des ouvertures de suspension (28') correspondantes de la collerette de fixation (24') et présentent une arête d'enclenchement (36') tournée vers le fond (14'), derrière laquelle s'enclenche une surface d'enclenchement (34') correspondante d'une fenêtre de passage (20').

6. Module de coussin à gaz selon la revendication 5, dans lequel la paroi périphérique (16') de la partie de boîtier (10') dépasse les ergots d'enclenchement (18') dans la direction détournée du fond (14').

7. Module de coussin à gaz selon la revendication 5 ou 6, dans lequel la paroi de soutien (17') du couvercle (12) est entourée par une sangle de sécurité (44').

8. Module de coussin à gaz selon la revendication 8, dans lequel la sangle de sécurité (44') est agencée sur le côté des ergots d'enclenchement (18') qui est détourné du fond (14').

9. Module de coussin à gaz selon l'une des revendications 5 à 8, dans lequel la paroi de soutien (17') du couvercle (12) présente une rampe (46') sur la face intérieure de son bord libre tourné vers le fond (14') de la partie de boîtier (10') pour passer au-dessus des ergots d'enclenchement (18').

10. Module de coussin à gaz selon l'une des revendications 5 à 9, dans lequel une gorge (42') est ménagée dans l'arête d'enclenchement (36') de chaque ergot d'enclenchement (18') et le bord d'une ouverture de suspension (28') du coussin à gaz (26') s'engage dans cette gorge (42').

11. Module de coussin à gaz selon l'une des revendications 5 à 10, dans lequel les ergots d'enclenchement (18') présentent sur leur côté détourné de l'arête d'enclenchement (36') une surface de butée (38') pour l'arête de limitation (40') adjacente de la fenêtre de passage (20') correspondante de la paroi de soutien (17').
